# EUROPÄISCHE PATENTANMELDUNG

(11) **EP 2 090 193 A1**
(43) Veröffentlichungstag der Anmeldung: **19.08.2009**
(21) Anmeldenummer: 09152351.4
(22) Anmeldetag: 09.02.2009
(51) Int. Cl.: A47C 7/00, F16F 9/43, A47C 3/30

(54) **Auslösekopf und Auslösevorrichtung für eine Gasfeder**

(30) Priorität: 15.02.2008 DE 202008002081 U
(71) Anmelder: Mey-Tech, 96476 Bad Rodach Mährenhausen (DE)
(72) Erfinder: Mey, Bernhard, 96476 Bad Rodach Mährenhausen (DE)
(74) Vertreter: Skuhra, Udo

(57) **Zusammenfassung**

Bereitgestellt wird ein Auslösekopf (110) für eine Gasfeder (190) mit einer Aufnahmehülse (120) zur Aufnahme einer Gasfeder (190), einer Gehäusewand (130), die die Aufnahmehülse (120) umgibt und mindestens vier Gehäusewandabschnitte (131a,131d) aufweist, die sich parallel zur Längsachse der Aufnahmehülse (120) erstrecken, und Rippen (140), die sich von der Aufnahmehülse (120) radial zu der Gehäusewand (130) erstrecken und die Aufnahmehülse (120) mit der Gehäusewand (130) verbinden, wobei mindestens zwei einander gegenüberliegende Gehäusewandabschnitte (131a,131d) der Gehäusewand (130) zumindest abschnittsweise wellenförmig ausgebildet sind. Ferner wird eine Auslösevorrichtung (100) zum Auslösen einer Gasfeder (190) bereitgestellt, die einen solchen Auslösekopf (110) aufweist.

## Beschreibung

Die vorliegende Erfindung betrifft einen Auslösekopf und eine Auslösevorrichtung für eine Gasfeder, wie sie zum Beispiel in höhenverstellbaren Bürostühlen verwendet werden.

Höhenverstellbare Bürostühle, deren Höhe durch Betätigung einer Gasdruckfeder bzw. Gasfeder eingestellt werden kann, sind allgemein bekannt. Ein typischer höhenverstellbarer Bürostuhl weist ein Fußkreuz auf, in dessen Mitte eine nach oben ragende Gasfeder aufgenommen ist. Das obere Ende der Gasfeder ist in einem topfförmigen Auslösekopf aufgenommen, der beispielsweise mittels Schrauben an der Unterseite der Sitzfläche befestigt ist. Im Auslösekopf ist ein Hebelarm gelagert. Durch Betätigung bzw. Verkippen des Hebelarms kann die Gasfeder ausgelöst bzw. betätigt werden, und somit die Höhe des Bürostuhls eingestellt werden.

Bekannt sind Auslöseköpfe mit einer konischen Aufnahmehülse, in welcher die Gasfeder aufgenommen ist, und einer die Aufnahmehülse umgebenden Gehäusewand, die beispielsweise durch radiale Rippen mit der Aufnahmehülse verbunden ist. Ein solcher Auslösekopf ist typischerweise topfförmig, und hat eine in Draufsicht im Wesentlichen quadratische Form mit abgerundeten Ecken. Der Auslösekopf ist z.B. mit vier Schrauben an der Unterseite des Sitzes befestigt.

Bei Verwendung des Bürostuhls kommt es zu Lastwechseln im Auslösekopf, die zu erheblichen Beanspruchungen des Auslösekopfes führen. Solche Lastwechsel treten insbesondere auf, wenn sich eine Person auf den Stuhl setzt bzw. davon erhebt, oder wenn eine Gewichtsverlagerung stattfindet, beispielsweise von rechts nach links oder auf die Vorderkante des Stuhls. Ferner sind Bürostühle typischerweise mit einer Rückenlehne versehen, die mit der Sitzfläche verbunden ist. Lehnt sich der Benutzer nach hinten, dann treten beträchtliche Biegespannungen im Auslösekopf auf. Diese Spannungen werden von der Gehäusewand über die Rippen an die Aufnahmehülse weitergeleitet. An der Aufnahmehülse haben die Rippen typischerweise die kürzeste Längsausdehnung, so dass hier die größte Belastung auftritt. Ein durch Lastwechsel bedingter Defekt tritt daher typischerweise als Riss am Übergang zwischen Aufnahmehülse und den daran anschließenden Rippen auf.

Eine Möglichkeit, dem oben beschriebenen Materialversagen entgegenzuwirken, ist es, die Wanddicke der Gehäusewand oder der Rippen zu erhöhen. Allerdings ist dies mit einem größeren Gewicht und höheren Materialkosten verbunden und daher nicht wünschenswert.

Es ist somit eine Aufgabe der vorliegenden Erfindung, einen Aufnahmekopf bereitzustellen, der eine hohe Stabilität aufweist, insbesondere bei im Wesentlichen gleichem oder geringerem Gewicht.

Erfindungsgemäß wird diese Aufgabe durch einen Aufnahmekopf gemäß Anspruch 1 gelöst.

Dementsprechend vorgesehen ist ein Auslösekopf für eine Gasfeder, mit
- einer insbesondere konischen Aufnahmehülse zur Aufnahme einer Gasfeder,
- einer Gehäusewand, die die Aufnahmehülse umgibt und mindestens vier Gehäusewandabschnitte aufweist, die sich parallel zur Längsachse der Aufnahmehülse erstrecken, und
- Rippen, die sich von der Aufnahmehülse radial zu der Gehäusewand erstrecken und die Aufnahmehülse mit der Gehäusewand verbinden,
wobei mindestens zwei einander gegenüberliegende Gehäusewandabschnitte der Gehäusewand zumindest abschnittsweise wellenförmig ausgebildet sind.

Die der Erfindung zugrundeliegende Idee ist es, die Gehäusewand zumindest abschnittsweise wellenförmig auszubilden, wodurch der Querschnitt der Gehäusewand in der Ebene senkrecht zur Längsachse der Aufnahmehülse erhöht wird. Somit werden Biegespannungen im Auslösekopf, die bei Lastwechseln auftreten, besser verteilt und die Belastbarkeit des Auslösekopfes wird erhöht.

Die Gehäusewand kann einen ersten Gehäusewandteil und einen zweiten Gehäusewandteil aufweisen, wobei sich der erste Gehäusewandteil parallel zur Längsachse der Aufnahmehülse erstreckt, und wobei sich der zweite Gehäuseabschnitt von einem Ende des ersten Gehäuseabschnitts konisch zur Aufnahmehülse erstreckt. Somit wird eine stabile Konstruktion der Auslösekopfes verwirklicht.

Der Auslösekopf weist vorzugsweise mindestens zwölf Rippen, besonders vorzugsweise mindestens vierzehn Rippen auf. Eine solch hohe Anzahl von Rippen erhöht die Belastbarkeit des Auslösekopfes.

Der Auslösekopf kann beispielsweise aus einer Aluminium-Legierung gefertigt sein, wodurch ein geringes Gewicht erzielt werden kann. Ein besonders vorteilhaftes Material ist AlSi8Cu3, da es ein geringes Gewicht bei hoher Festigkeit aufweist.

Die Gehäusewand kann mit mindestens einer Ausnehmung zur Durchführung eines Hebelarms versehen sein.

Es ist vorteilhaft, wenn alle vier Gehäusewandabschnitte der Gehäusewand zumindest abschnittsweise wellenförmig ausgebildet sind, da dann die oben genannten Vorteile besonders zur Geltung kommen.

Die Gehäusewandabschnitte der Gehäusewand können abschnittsweise konzentrisch zur Aufnahmehülse ausgebildet sind. Somit werden die die Gehäusewand und die Aufnahmehülse verbindenden Rippen gleichmäßiger belastet.

Ein oben beschriebener Auslösekopf kann auf der Innenseite eines der Gehäusewandabschnitte ein Lager zur Lagerung eines Auslösehebels aufweisen und dieser Gehäusewandabschnitt kann mit mindestens einer Ausnehmung zur Durchführung eines Auslösehebels versehen sein. Ein solcher Auslösekopf kann Teil einer Auslösevorrichtung sein, die ferner Folgendes aufweist:
- einen Hebelarm, der durch die Ausnehmung geführt ist und derart im Lager gelagert ist, dass sein eines Ende in Richtung der Längsachse der Aufnahmehülse zum Auslösen einer in der Aufnahmehülse aufgenommenen Gasfeder verschwenkbar ist, und
- eine Schenkelfeder, die so angeordnet ist, dass sie auf das eine Ende des Hebelarms eine Federkraft ausübt und somit das Spiel zwischen dem Hebelarm und einer Auslösenocke der Gasfeder aufhebt.

Im oben beschriebener Auslösekopf können auch zwei gegenüber voneinander angeordnete Gehäusewandabschnitte jeweils eine Ausnehmung zur Durchführung eines Hebelarms aufweisen. Ein solcher Auslösekopf kann Teil einer Auslösevorrichtung sein, die ferner Folgendes aufweist:
- ein Steuerkreuz mit zwei Hauptarmen, die respektive durch die zwei Ausnehmungen geführt sind und beidseitig vom Auslösekopf abstehen, wobei ein mittlerer Abschnitt des Steuerkreuzes in Richtung der Längsachse der Aufnahmehülse verschwenkbar ist, und
- einem Betätigungsring, der mit den zwei vom Auslösekopf abstehenden Enden des Steuerkreuzes verbunden ist.

Wenn eine solche Auslösevorrichtung an die Unterseite eines Bürostuhls befestigt ist, kann die Gasfeder von beiden Seiten des Bürostuhls aus ausgelöst werden, so dass sie sowohl für Linkshänder als auch für Rechtshänder problemlos betätigbar ist.

Der Betätigungsring kann an die Form der Unterseite des Sitzes des Bürostuhls angepasst werden und kann insbesondere kreisförmig oder sattelförmig sein.

Die Auslösevorrichtung kann ferner Folgendes aufweisen:
- ein plattenförmiges Halteelement welches an einem Ende der Aufnahmehülse angeordnet ist, wobei das Steuerkreuz zwischen dem Halteelement und der Aufnahmehülse angeordnet ist, und
- eine konische Schraubenfeder, die zwischen der Aufnahmehülse und dem Steuerkreuz angeordnet ist und das Steuerkreuz gegen das Halteelement drückt.

Die Auslösevorrichtung kann ferner eine Justierschraube aufweisen, die in eine Gewindebohrung im Steuerkreuz gegenüber der Aufnahmehülse geschraubt ist und deren Vorsprung in Richtung der Aufnahmehülse einstellbar ist. Somit kann der Auslösekopf an Gasfedern unterschiedlicher Bauart angepasst werden.

Ausführungsbeispiele der Erfindung sind in den schematischen Figuren der Zeichnungen dargestellt und in der nachfolgenden Beschreibung näher erläutert. Es zeigen hier:
- Fig. 1: eine Draufsicht auf den Auslösekopf gemäß einer ersten Ausführungsform.
- Fig. 2: eine Unteransicht des Auslösekopfes gemäß der ersten Ausführungsform.
- Fig. 3: eine Vorderansicht des Auslösekopfes gemäß der ersten Ausführungsform.
- Fig. 4: eine Rückansicht des Auslösekopfes gemäß der ersten Ausführungsform.
- Fig. 5: eine Querschnittsansicht durch den Auslösekopf gemäß der ersten Ausführungsform entlang der Schnittlinie A-A in Fig. 4.
- Fig. 6: eine Querschnittsansicht durch den Auslösekopf gemäß der ersten Ausführungsform entlang der Schnittlinie B-B in Fig. 1.
- Fig. 7: eine perspektivische Ansicht des Auslösekopfes gemäß der ersten Ausführungsform.
- Fig. 8: eine Querschnittsansicht durch den Auslösekopf gemäß der ersten Ausführungsform entlang der Schnittlinie A-A in Fig. 4 mit aufgenommener Gasfeder.
- Fig. 9: eine Auslösevorrichtung gemäß der ersten Ausführungsform gemäß der ersten Ausführungsform.
- Fig. 10: eine Unteransicht der Auslösevorrichtung gemäß einer zweiten Ausführungsform.
- Fig. 11: eine Vorderansicht der Auslösevorrichtung gemäß der zweiten Ausführungsform.
- Fig. 12: zeigt eine Querschnittsansicht durch die Auslösevorrichtung gemäß der zweiten Ausführungsform entlang der Schnittlinie C-C in Fig. 10.
- Fig. 13: eine perspektivische Ansicht der Auslösevorrichtung gemäß der zweiten Ausführungsform.
- Fig. 14: eine perspektivische Ansicht einer Auslösevorrichtung, die eine Variante der zweiten Ausführungsform darstellt.
- Fig. 15: eine Unteransicht der Auslösevorrichtung gemäß einer dritten Ausführungsform.
- Fig. 16: eine Vorderansicht der Auslösevorrichtung gemäß der dritten Ausführungsform.
- Fig. 17: eine Querschnittsansicht durch die der Auslösevorrichtung gemäß der dritten Ausführungsform entlang der Schnittlinie D-D in Fig. 15.
- Fig. 18: eine perspektivische Ansicht der Auslösevorrichtung gemäß der dritten Ausführungsform.
- Fig. 19: eine Draufsicht der Auslösevorrichtung gemäß einer vierten Ausführungsform.
- Fig. 20: eine Unteransicht der Auslösevorrichtung gemäß der vierten Ausführungsform.
- Fig. 21: eine Vorderansicht der Auslösevorrichtung gemäß der vierten Ausführungsform.
- Fig. 22: eine Querschnittsansicht durch die der Auslösevorrichtung gemäß der vierten Ausführungsform entlang der Schnittlinie E-E in Fig. 19.
- Fig. 23: eine perspektivische Ansicht der Auslösevorrichtung gemäß der vierten Ausführungsform.

In den Figuren bezeichnen gleiche Bezugszeichen gleiche oder funktionsgleiche Elemente, Merkmale und Signale.

### Erste Ausführungsform

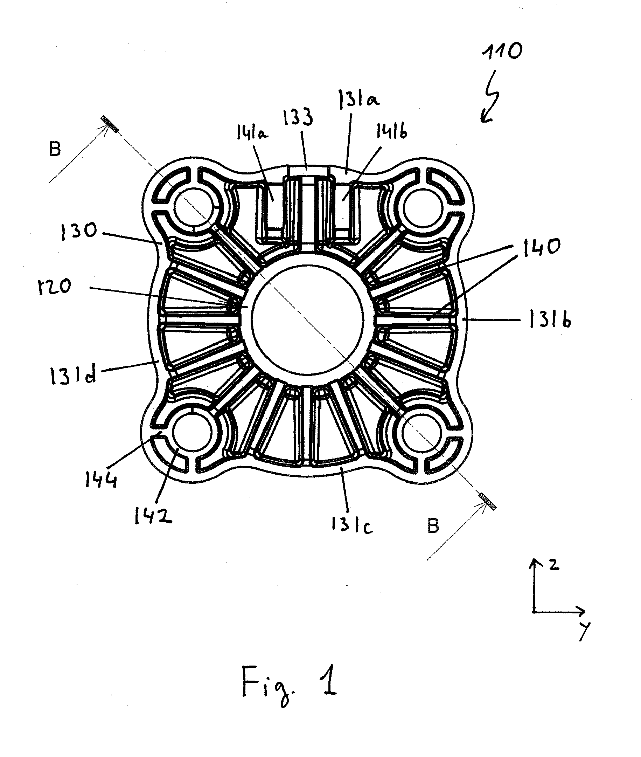

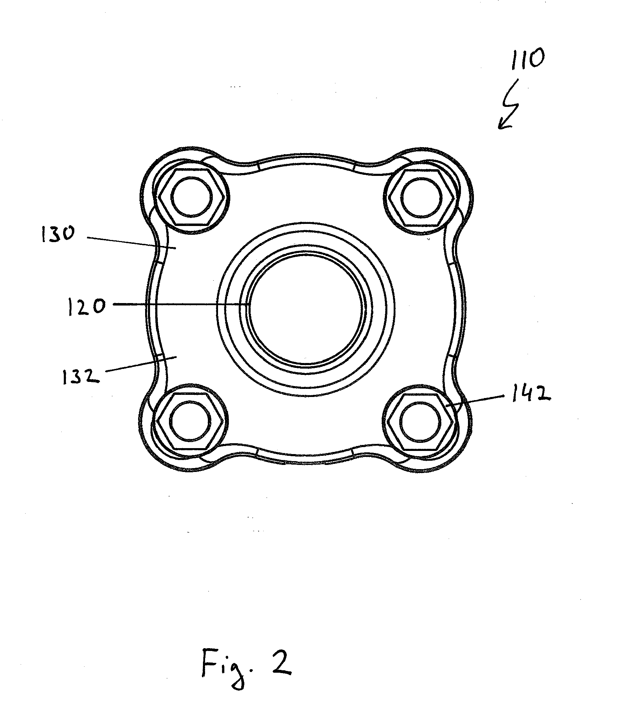

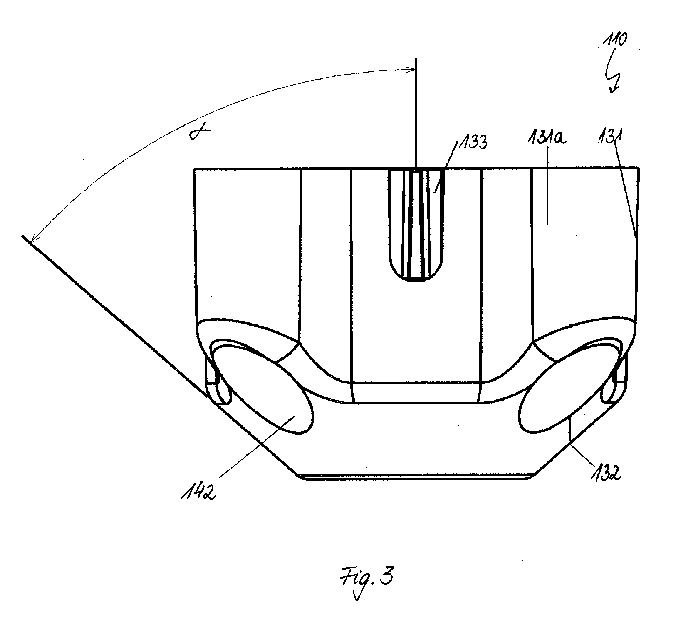

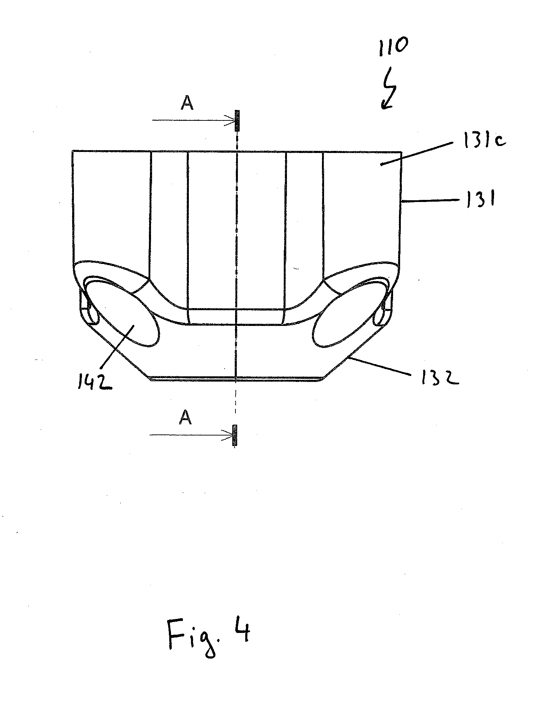

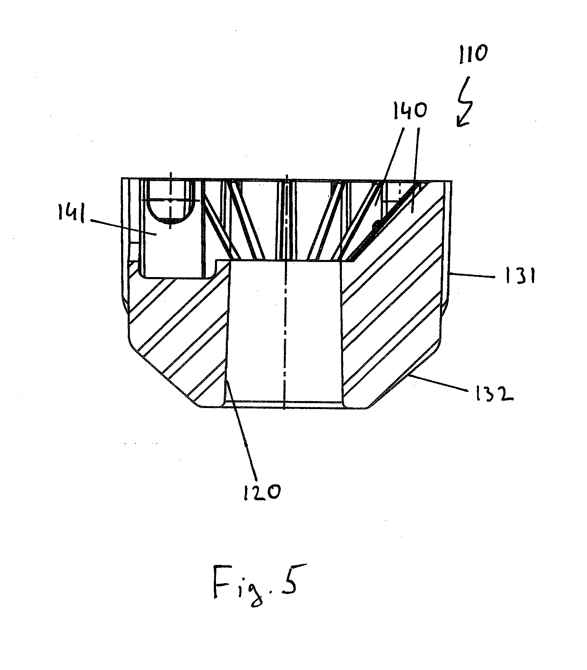

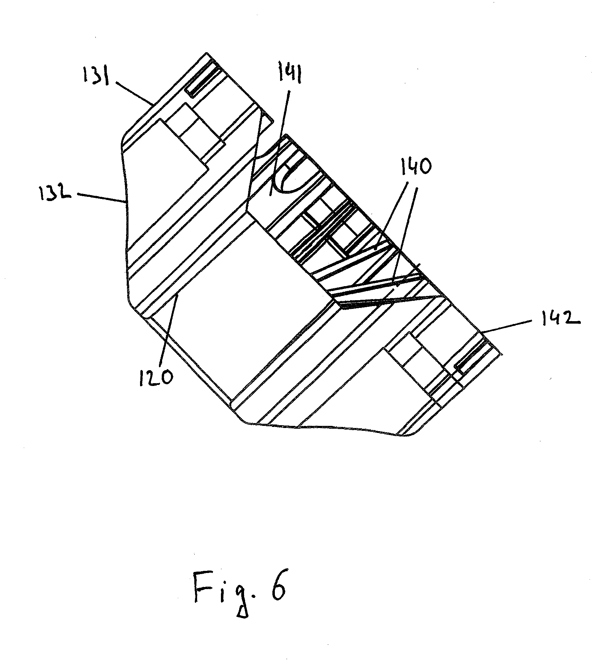

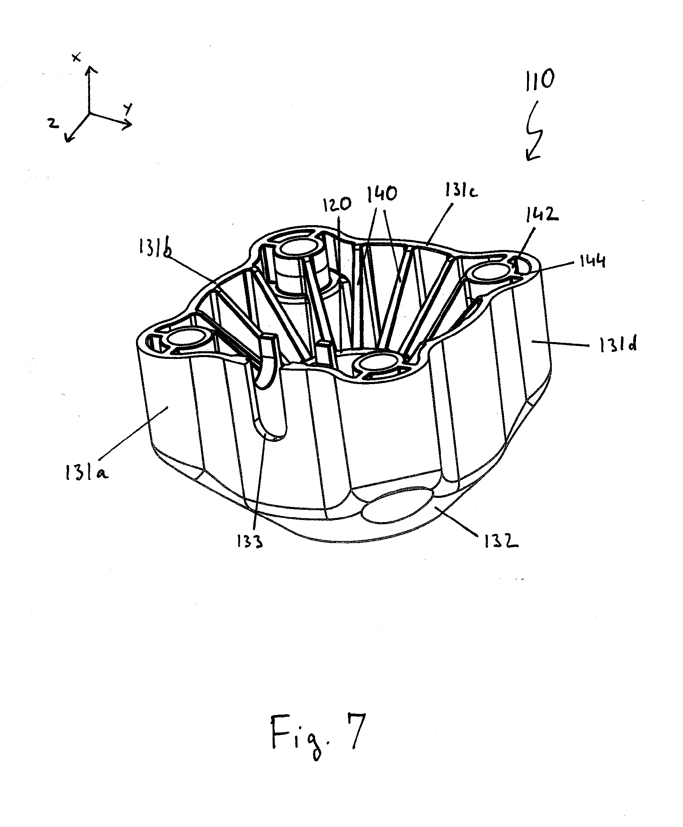

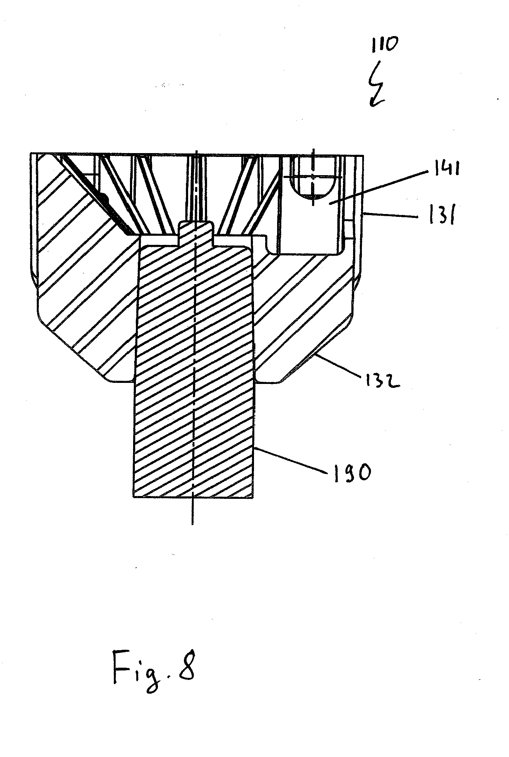

Im Folgenden wird anhand der Fign. 1 bis 8 ein Auslösekopf 110 gemäß einer ersten Ausführungsform beschrieben. Fig. 1 zeigt eine Draufsicht auf den Auslösekopf gemäß der ersten Ausführungsform. Fig. 2 zeigt eine Unteransicht des Auslösekopfes gemäß der ersten Ausführungsform. Fig. 3 zeigt eine Vorderansicht des Auslösekopfes gemäß der ersten Ausführungsform. Fig. 4 zeigt eine Rückansicht des Auslösekopfes gemäß der ersten Ausführungsform. Fig. 5 zeigt eine Querschnittsansicht durch den Auslösekopf gemäß der ersten Ausführungsform entlang der Schnittlinie A-A in Fig. 4. Fig. 6 zeigt eine Querschnittsansicht durch den Auslösekopf gemäß der ersten Ausführungsform entlang der Schnittlinie B-B in Fig. 1. Fig. 7 zeigt eine perspektivische Ansicht des Auslösekopfes gemäß der ersten Ausführungsform. Fig. 8 zeigt eine Querschnittsansicht durch den Auslösekopf gemäß der ersten Ausführungsform entlang der Schnittlinie A-A in Fig. 4 mit aufgenommener Gasfeder 190.

Der Auslösekopf 110 weist eine Aufnahmehülse 120, eine Gehäusewand 130 und Rippen 140 auf. Die Aufnahmehülse 120 hat die Form einer konischen Hülse mit einem Konuswinkel von 1° bis 2°, z.B. 1°26'16", und dient zur Aufnahme einer zylindrischen Gasfeder mit Konuskopf 190, siehe Fig. 8. Die Gehäusewand 130 umgibt die Aufnahmehülse 120 und ist konzentrisch zur Aufnahmehülse 120 angeordnet. In vertikaler Richtung, also in der Richtung entlang der Längsachse der Aufnahmehülse 120 (x-Achse) ist die Gehäusewand 130 in einen oberen ersten Gehäusewandteil 131 und einen unteren zweiten Gehäusewandteil 132 unterteilt.

Der obere Gehäusewandteil 131 weist vier Gehäusewandabschnitte 131a, 131b, 131c und 131d auf, welche sich jeweils in der Richtung der x-Achse erstrecken. Die zwei Gehäusewandabschnitte 131a und 131c sind einander gegenüberliegend angeordnet und erstrecken sich in Draufsicht im Wesentlichen entlang der y-Achse, welche orthogonal zur x-Achse liegt. Auch die zwei Gehäusewandabschnitte 131b und 131d sind einander gegenüberliegend angeordnet und erstrecken sich in Draufsicht im Wesentlichen entlang der z-Achse, welche orthogonal zu der x- und der y-Achse liegt. Die Gehäusewandabschnitte 131a bis 131d sind wellenförmig ausgebildet, wie weiter unten noch im Detail erläutert wird. Die Höhe der Gehäusewand 131, also die Länge ihrer Ausdehnung in Richtung der x-Achse ist größer als die Länge der Aufnahmehülse 120 in Richtung der x-Achse.

Der untere Gehäusewandteil 132 ist konisch und verbindet die den oberen Gehäusewandteil 131 bzw. die Gehäusewandabschnitte 131a bis 131d mit der Aufnahmehülse 120. Der Winkel α, der von dem Gehäusewandteil 132 und der Richtung der x-Achse definiert wird, ist vorzugsweise größer als 45 Grad und kann z.B. im Bereich von 45 bis 55 Grad liegen. Gegenüber Anordnungen, in denen der Winkel 45 Grad oder weniger beträgt hat dies den Vorteil, dass, bei gleicher Gesamthöhe des Auslösekopfes, die Höhe des oberen Gehäusewandteils 131 verlängert und die Höhe des unteren Gehäusewandteils 132 verkürzt wird, so dass die Länge der mit dem oberen Gehäusewandteil 131 verbundenen Rippen 140 vergrößert wird, was zu einer größeren Stabilität beiträgt.

In vier Ecken bzw. peripheren Bereichen des Auslösekopfes 110 sind Schraubenaufnahmen 142 ausgebildet. Die Schraubenaufnahmen 142 sind im Wesentlichen hülsenförmig bzw. zylindrisch und erstrecken sich in der Richtung der x-Achse. Die Mittelpunkte der Schraubenaufnahmen 142 definieren ein Quadrat, oder anders ausgedrückt, die Schraubenaufnahmen 142 sind auf den Eckpunkten eines Quadrats angeordnet. Die Schraubenaufnahmen 142 dienen zur Aufnahme von Befestigungsschrauben (nicht dargestellt), mit welchen der Auslösekopf 110 an der Unterseite der Sitzfläche des Bürostuhls befestigt werden kann. Die Schraubenaufnahmen 142 sind jeweils in einen oberen Abschnitt 142a mit einem kleineren Durchmesser und einen unteren Abschnitt 142b mit einem größeren Durchmesser unterteilt. Am Übergang zwischen dem oberen und dem unteren Abschnitt 142a, 142b ist eine Stufe vorgesehen, die als Gegenlager dient, wenn eine Befestigungsschraube in die Schraubenaufnahme 142 eingeführt ist. Zur effektiveren Kraftübertragung bzw. zur Vereinfachung der Befestigung mittels Schrauben sind die Schraubenaufnahmen 142 in diesem Bereich abschnittsweise mit einer zum Schraubenkopf komplementären Form, also z.B. einer Sechseckform, versehen (siehe Fig. 2).

Die Rippen 140 verbinden die Aufnahmehülse 120 mit der Gehäusewand 130 bzw. den Schraubenaufnahmen 142. Die Rippen 140 sind z.B. im Wesentlichen parallelogrammförmig, wie beispielsweise aus Fign. 5 und 8 ersichtlich ist, und sie sind begrenzt durch die Außenwand der Aufnahmehülse 120, dem dazu parallel verlaufenden oberen Gehäusewandabschnitt 131a, 131b, 131c bzw. 131d, dem unteren Gehäusewandteil 132 und einer Verbindungslinie, die die Oberkante der Aufnahmehülse 120 mit der Oberkante der Gehäusewand 130 verbindet. In der vorliegenden Ausführungsform sind vierzehn Rippen 140 vorgesehen (siehe z.B. Fig. 1), was die Stabilität des Auslösekopfes 110 gegenüber Auslöseköpfen, die beispielsweise nur mit zehn oder weniger Rippen versehen sind, signifikant erhöht.

Ferner sind zwischen den oberen Abschnitten 142a der Schraubenaufnahmen 142 und den Gehäusewandabschnitten 131a, 131b, 131c und 131d jeweils zwei kleine Rippen 144 vorgesehen. Bei Lastwechseln werden Kräfte über die Schraubenaufnahmen 142 in den Auslösekopf 110 geleitet, so dass eine Verstärkung mit Rippen 144 an dieser Stelle zu einer größeren Stabilität beiträgt.

Der Gehäusewandabschnitt 131c ist mit einer U-förmigen Ausnehmung 133 versehen. Diese Ausnehmung 133 dient zur Durchführung eines Hebelarms 160, wie nachfolgend noch erläutert werden wird. An der Innenseite des Gehäusewandabschnitts 131c ist ein Lager 141 zur Lagerung des Hebelarms 160 vorgesehen. Dieses Lager 141 besteht aus zwei plattenförmigen Lagerelementen 141a und 141b, die sich senkrecht vom unteren Gehäusewandteil 132 nach oben erstrecken und deren oberes Ende jeweils mit einer U-förmigen Ausnehmung zur Aufnahme einer Querachse ist, um die der Hebelarm 160 verschwenkbar ist.

Wie bereits oben erwähnt sind die Gehäusewandabschnitte 131a bis 131d jeweils wellenförmig ausgebildet. Unter "wellenförmig" ist hierbei zu verstehen, dass entlang der wellenförmigen Gehäusewandabschnitte in der Draufsicht jeweils mindestens zwei Ausbuchtungen vorgesehen sind. Die Gehäusewandabschnitte 131a bis 131d sind also um die x-Achse und/oder zur x-Achse parallele Achsen gebogen. Beispielsweise sind in dem Gehäusewandabschnitt 131a zwei Ausbuchtungen dadurch gegeben, dass der Gehäusewandabschnitt 131a entlang zweier der vier Schraubenaufnahmen 142 verläuft. Eine dritte Ausbuchtung ist dadurch gegeben, dass der Gehäusewandabschnitt 131a in seiner Mitte bezüglich der y-Achse leicht nach außen gewölbt ist.

In den ersten und zweiten Ausbuchtungen nahe der Schraubenaufnahmen 142 ist der Gehäusewandabschnitt 131a kreisförmig gewölbt, wobei der Mittelpunkt des Kreises mit dem Mittelpunkt der zylindrischen Schraubenaufnahmen 142 übereinstimmt. Die dritte Ausbuchtung im mittleren Abschnitt des Gehäusewandabschnitts 131a folgt einem Kreis, dessen Mittelpunkt mit dem Mittelpunkt der konischen Aufnahmehülse 120 übereinstimmt. Der Krümmungsradius der ersten und zweiten Ausbuchtungen ist also wesentlich kleiner als der Krümmungsradius der dazwischen angeordneten dritten Ausbuchtung.

Durch die wellenförmigen Gehäusewandabschnitte wird die Stabilität des Auslösekopfes signifikant erhöht. Bei Lastwechseln treten in der Gehäusewand 130 Spannungen, insbesondere Biegespannungen auf, die über die Rippen 140 an die Aufnahmehülse 120 weitergeleitet werden. Dadurch, dass die Gehäusewandabschnitte 131a bis 131d wellenförmig ausgebildet sind, wird der Querschnitt dieser Gehäusewandabschnitte effektiv vergrößert, so dass Spannungen in der Gehäusewand besser verteilt werden können. Somit wird die Stabilität des Auslösekopfes auch bei hohen Belastungen gewährleistet.

Ferner ist die dritte Ausbuchtung in der Mitte der Gehäusewandabschnitte konzentrisch zur Aufnahmehülse 120 angeordnet. Folglich sind auch die drei in diesem Bereich vorgesehenen Rippen jeweils gleich breit und Kräfte werden gleichmäßig von der Gehäusewand 130 über die Rippen 140 an die Aufnahmehülse 120 übertragen. Somit wird vermieden, dass die Rippen 140 in diesem Bereich unterschiedlichen Belastungen ausgesetzt sind.

Der Auslösekopf 110 gemäß dieser Ausführungsform kann durch Druckguss hergestellt werden. Er kann beispielsweise aus einer Aluminiumlegierung gefertigt werden, was ein geringes Gewicht gewährleistet. Ein besonders geeignetes Material ist AlSi8Cu3, weil dieses eine sehr hohe Festigkeit bei vergleichsweise geringem Gericht aufweist. Durch die Verwendung von AlSi8Cu3 wird also eine hohe Stabilität bei geringem Gewicht verwirklicht.

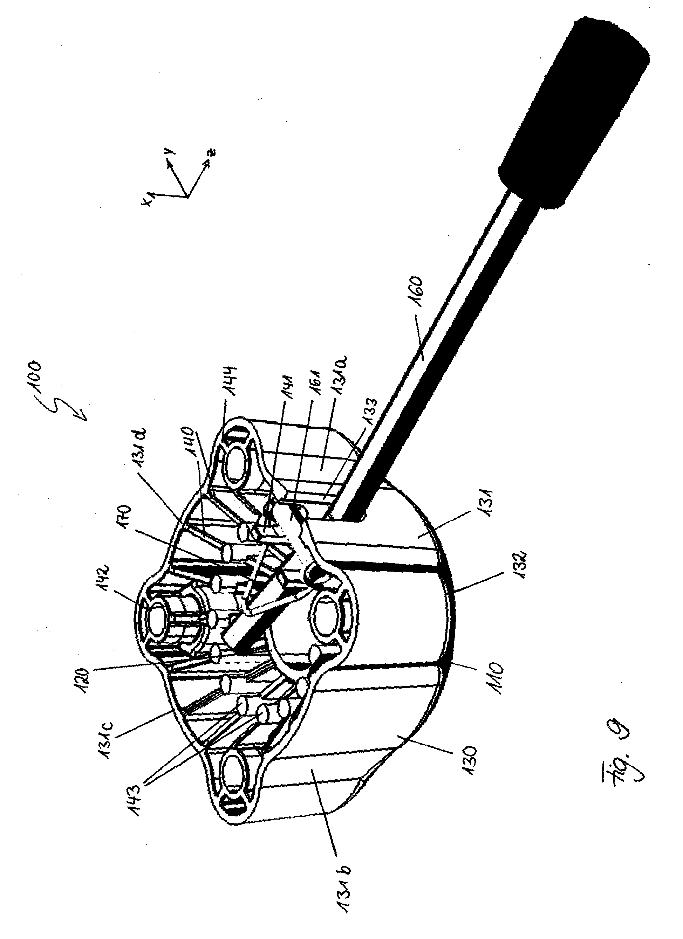

Fig. 9 zeigt eine Auslösevorrichtung 110 gemäß der ersten Ausführungsform. Die Auslösevorrichtung 110 umfasst den oben beschriebenen Auslösekopf 110, einen Hebelarm 160 und eine Schenkelfeder 170. Der Hebelarm 160 ist durch die Ausnehmung 133 geführt. Der Hebelarm 160 ist mit einer dazu orthogonal angeordneten Querachse 161 verbunden, die im Lager 141 gelagert ist. Die Schenkelfeder 170 ist im Auslösekopf 110 verankert und um die Querachse 161 gewickelt. Die Schenkelfeder 170 drückt das vordere Ende des Hebelarms 160 auf der der Aufnahmehülse 120 zugewandten Seite mit definierter Kraft nach unten, also zur Gasfeder. Im eingebauten Zustand kann die Gasfeder nun ausgelöst werden, indem der Hebelarm 160 an seinem freien Ende in Richtung der Federkraft der Schenkelfeder 140 nach oben gezogen wird, wodurch er um die Querachse 161 verschwenkt wird und das der Aufnahmehülse 120 zugewandte Ende des Hebelarms 160 auf die Auslösenocke der Gasfeder drückt und die Blockierung freigibt.

Ferner sind, wie in Fig. 9 erkennbar, in den Rippen 140 zwischen der Aufnahmehülse 120 und der Gehäusewand 130 Auswurfelemente 143 vorgesehen. Diese Auswurfelemente 143 sind säulenförmige Verdickungen deren oberes Ende jeweils eine kreisförmige Fläche bildet, die in der y-z-Ebene liegt. Sie dienen dazu, den Auswurf des Auslösekopfes 110 aus der Gussform nach dem Druckgussvorgang zu erleichtern.

### Zweite Ausführungsform

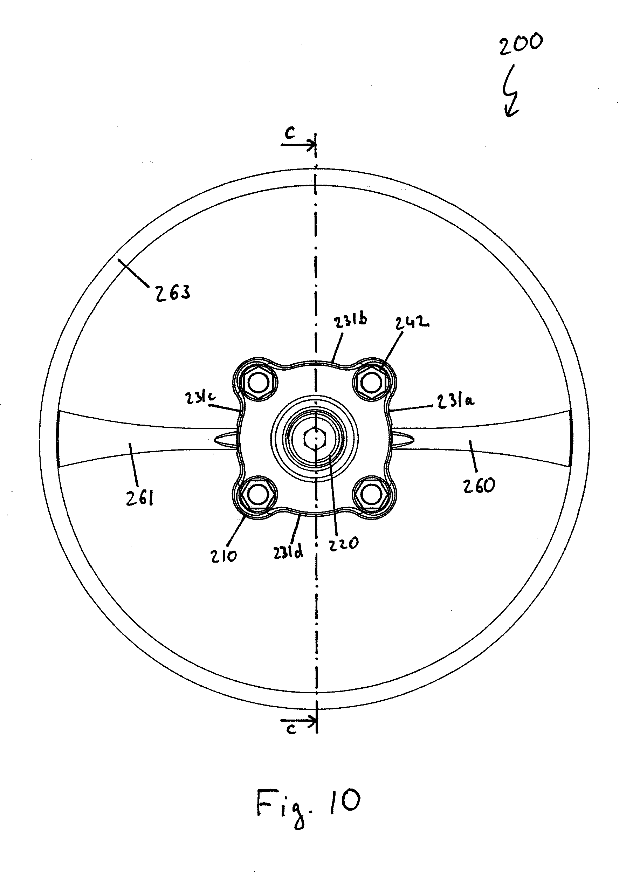

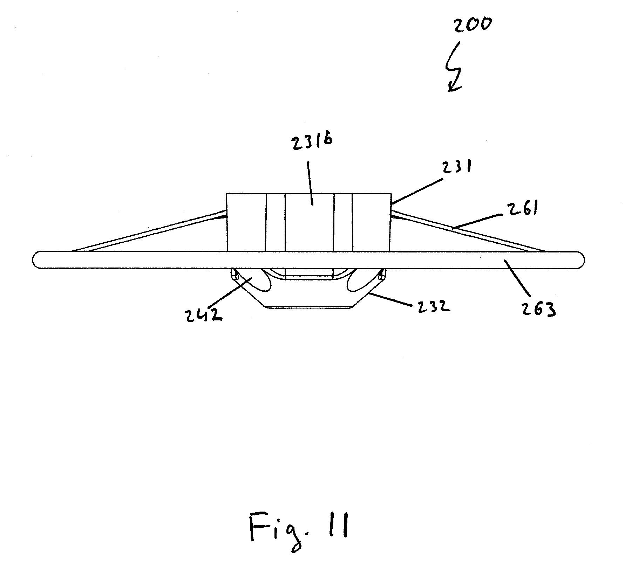

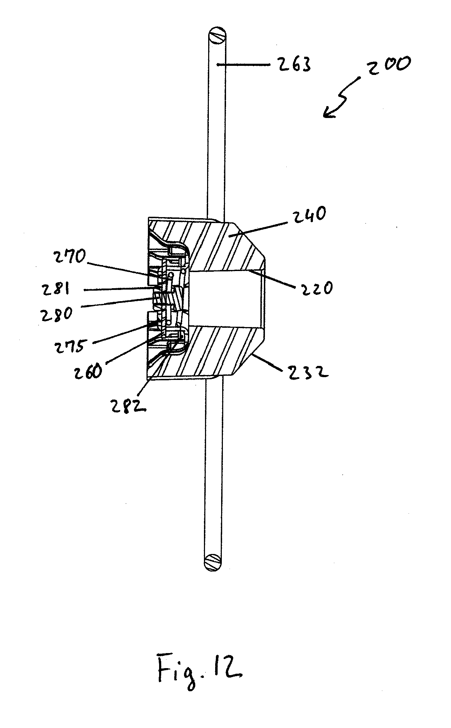

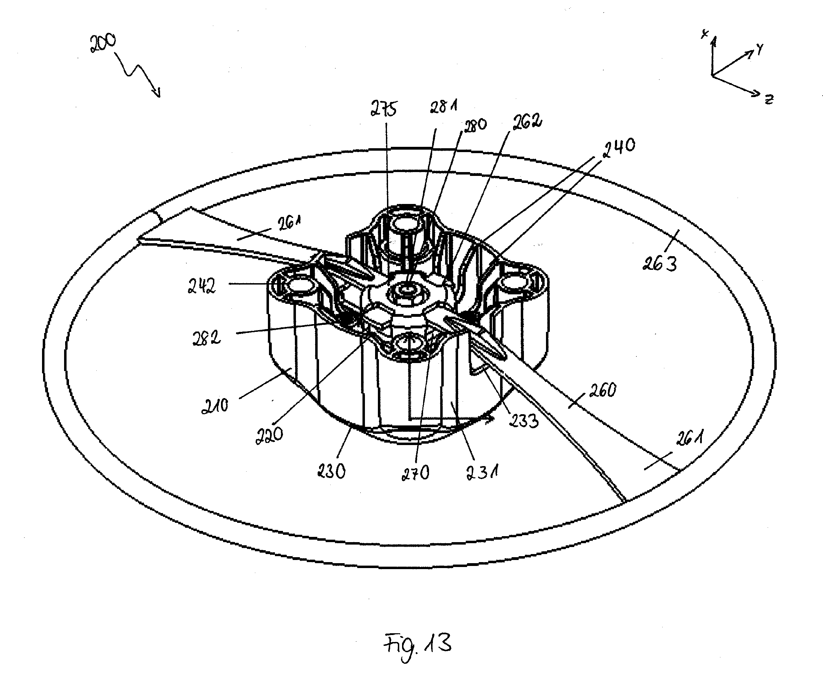

Im Folgenden wird anhand der Fign. 10 bis 13 eine Auslösevorrichtung 200 gemäß einer zweiten Ausführungsform beschrieben. Fig. 10 zeigt eine Unteransicht der Auslösevorrichtung 200. Fig. 11 zeigt eine Vorderansicht der Auslösevorrichtung 200. Fig. 12 zeigt eine Querschnittsansicht durch die Auslösevorrichtung 200 entlang der Schnittlinie C-C in Fig. 10. Fig. 13 zeigt eine perspektivische Ansicht der Auslösevorrichtung 200.

Die Auslösevorrichtung 200 umfasst einen Auslösekopf 210, ein Steuerkreuz 260, eine konische Schraubenfeder 270, einen Haltetopf 275, eine Justierschraube 280, eine Mutter 281, sowie vier Befestigungsschrauben 282.

Der Auslösekopf 210 hat einen ähnlichen Aufbau wie der Auslösekopf 110 der ersten Ausführungsform. Er umfasst ebenfalls eine konische Aufnahmehülse 220, eine diese umgebende Gehäusewand 230 sowie die Aufnahmehülse 220 und die Gehäusewand 230 bzw. die Schraubenaufnahmen 242 verbindende Rippen 240. Ferner ist die Gehäusewand 230 in ähnlicherweise wie die Gehäusewand 130 der ersten Ausführungsform mit einer Wellenform versehen. Andere Aspekte des Auslösekopf 210 sind, soweit nichts anderes angegeben ist, wie für den Auslösekopf 110 der ersten Ausführungsform beschrieben.

Der Auslösekopf 210 unterscheidet sich von dem Auslösekopf 110 der ersten Ausführungsform darin, dass zwei gegenüberliegende obere Gehäusewandabschnitte 231b und 231d jeweils mit einer Ausnehmung zur Durchführung des Steuerkreuzes 260 versehen sind. Ferner weist der Auslösekopf 210 kein Lager zur Lagerung eines Hebelarmes auf.

Das Steuerkreuz 260 ist mit dem Haltetopf 275 und der Schraubenfeder 270 fixiert. Der Haltetopf 275 weist vier Arme auf, die kreuzförmig in gleichen Abständen von einem Topfboden abstehen. Die vier Arme sind jeweils zweimal um ca. 90 Grad in entgegen gesetzten Richtungen abgewinkelt, wodurch sich eine Topfform ergibt. An den Enden der Arme sind Durchgangslöcher vorgesehen, um ein Verschrauben des Haltetopfes 275 zu ermöglichen. Ferner ist im Boden des Haltetopfes 275 eine kreisrunde Ausnehmung vorgesehen, durch welche die unten beschriebene Justierschraube 280 geführt ist.

Der Haltetopf 275 ist mit den vier Befestigungsschrauben 282, welche durch die in den Armen vorgesehenen Durchgangslöcher geführt sind, verschraubt, und zwar so, dass der Boden des Haltetopfes 275 nach oben weist. Hierzu ist der Auslösekopf 210 mit entsprechenden Schraubenaufnahmen bzw. Sacklöchern (nicht dargestellt) versehen, welche neben den Schraubenaufnahmen 242 auf der der Aufnahmehülse 220 zugewandten Seite angeordnet sind und deren Mittelpunkte ebenfalls ein Quadrat definieren. Die Rippen 240 sind in dieser Ausführungsform nicht mit geraden Oberkanten, sondern an ihren Oberkanten mit Aussparungen versehen, um ausreichenden Platz für die Befestigung des Haltetopfes 275 am Auslösekopf 210 bereitzustellen.

Das Steuerkreuz 260 weist zwei z.B. 250 bis 260 mm lange Hauptarme 261 sowie zwei kurze Nebenarme 262 auf, welche zusammen in der Form eines Kreuzes angeordnet sind. Die Hauptarme 261 ragen durch die Ausnehmungen 233 aus der Gehäusewand 230. Sie sind vorzugsweise leicht nach unten gebogen, was die Betätigung des Steuerkreuzes 260 erleichtert. An den dem Auslösekopf 210 abgewandten Enden sind die Hauptarme 261 zur Erhöhung der Stabilität verbreitert. Die verbreiterten Enden der Hauptarme 261 sind durch einen kreisrunden Betätigungsring 263 miteinander verbunden, wobei die Hauptarme 261 entlang des Durchmessers dieses Betätigungsring 263 angeordnet sind.

Die konische Schraubenfeder 270 ist im Haltetopf 275 angeordnet und drückt durch ihre Federkraft das Steuerkreuz 260 gegen den Boden des Haltetopfes 275, wobei die Oberkante der Aufnahmehülse 220 als Gegenlager dient. Dabei sind die Hauptarme 261 und die Nebenarme 262 durch die Zwischenräume zwischen den vier kreuzförmig angeordneten Armen des Haltetopfes 275 geführt, so dass das Steuerkreuz 260 in der y-z-Ebene fixiert ist und im Wesentlichen nicht um die x-Achse gedreht werden kann.

In der Mitte des Steuerkreuzes 260, also an der Stelle, die in der Mitte der kreisförmigen Ausnehmung im Boden des Haltetopfes 275 angeordnet ist, ist eine Durchgangsbohrung vorgesehen, die mit einem Gewinde versehen ist. In dieses Gewinde ist die Justierschraube 280 geschraubt und mit der Mutter 281 festgestellt. Die Justierschraube 280 ragt von der unteren Seite des Haltetopfes 275 nach unten und drückt bei der Betätigung der Auslösevorrichtung 200 gegen einen Auslösenocken der Gasfeder. Die Länge, um die die Justierschraube 280 nach unten ragt, ist einstellbar, so dass die Auslösevorrichtung 200 an verschiedene Typen von Gasfedern angepasst werden kann.

Die Auslösevorrichtung 200 ist mit Befestigungsschrauben an der Unterseite des Sitzes eines Bürostuhls befestigt, wobei die Auslösevorrichtung 200 derart ausgerichtet ist, dass die Hauptarme 261 des Steuerkreuzes 260 zu den beiden Seiten des Sitzes angeordnet sind. Die Auslösevorrichtung 200 kann von einer auf dem Bürostuhl sitzenden Person betätigt werden, indem sie den Betätigungsring 263 nach oben zieht. Hierdurch wird das Steuerkreuz 260 um eine Achse an der gegenüberliegenden Kante des Bodens des Haltetopfes 275 verkippt, wobei zur Verkippung die Federkraft der Schraubenfeder 270 überwunden werden muss. Bei der Verkippung des Steuerkreuzes 260 wird die Justierschraube 280 nach unten gegen einen Auslösenocken der in der Aufnahmehülse 220 angeordneten Gasfeder gedrückt und löst somit die Gasfeder aus. Nach der Betätigung des Betätigungsringes 263 wird das Steuerkreuz 260 wieder von der Schraubenfeder 270 in seine ursprüngliche Lage zurückgedrängt.

Ein Vorteil der oben beschriebenen Anordnung liegt darin, dass der Betätigungsring 263 in einfacher Weise von beiden Seiten des Sitzes zu erreichen ist. Folglich kann er von einer auf dem Stuhl sitzenden Person sowohl mit der rechten als auch mit der linken Hand betätigt werden, wohingegen herkömmliche Hebelanordnungen stets nur auf einer Seite angeordnet sind.

Ferner ist der Auslösekopf 210 achsensymmetrisch mit der x-Achse als Symmetrieachse. Somit werden auch Spannungen gleichmäßiger verteilt, was zu einer höheren Belastbarkeit führen kann.

Ferner sind auch in der vorliegenden Ausführungsform die Gehäusewandabschnitte 231a-231d wellenförmig ausgebildet, so dass auch diesbezüglich die für die erste Ausführungsform beschriebenen Vorteile erzielt werden.

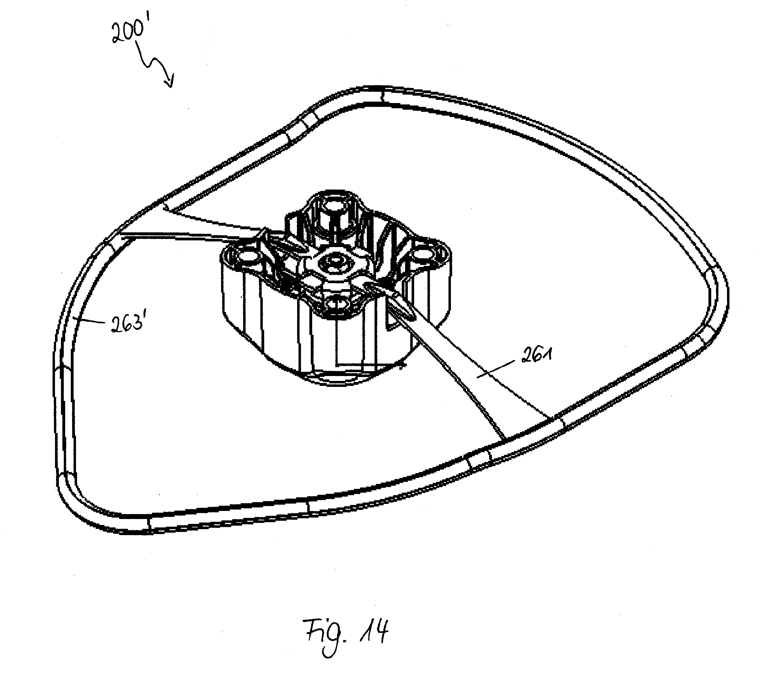

Fig. 14 zeigt eine Auslösevorrichtung 200', die eine Variante der zweiten Ausführungsform darstellt. Die in Fig. 14 dargestellte Auslösevorrichtung 200' unterscheidet sich lediglich in der Form ihres Betätigungsrings 263' von der Auslösevorrichtung 200. Der Betätigungsring 263' der Auslösevorrichtung 200' ist sattelförmig ausgebildet. Genauer gesagt münden die Hauptarme 261 in im Wesentlichen gerade Abschnitte des Betätigungsrings 263'. Zur einen Seite sind diese geraden Abschnitte des Betätigungsrings 263' über einen bügelartigen Abschnitt miteinander verbunden. Zur anderen Seite sind diese gerade Abschnitte des Betätigungsrings 263' über einen im Wesentlichen V-förmigen Abschnitt mit abgerundeter Spitze miteinander verbunden. Der V-förmige Abschnitt ist leicht nach unten gebogen. Somit kann der Betätigungsring 263' an die Unterseite eines sattelförmigen Sitzes angepasst werden, dessen Form die Verwendung des kreisringförmigen Betätigungsrings 263 nicht erlauben würde.

### Dritte Ausführungsform

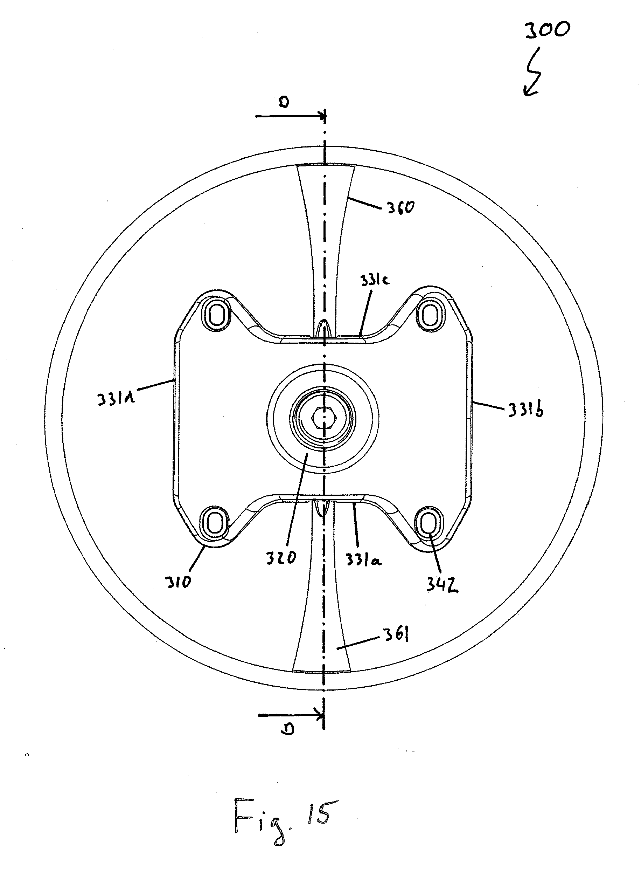

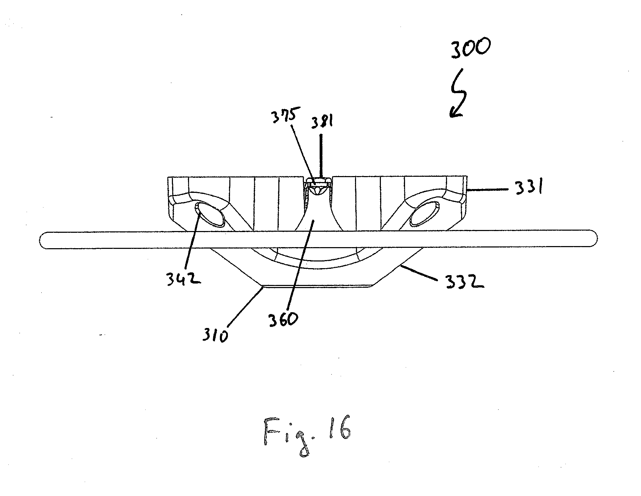

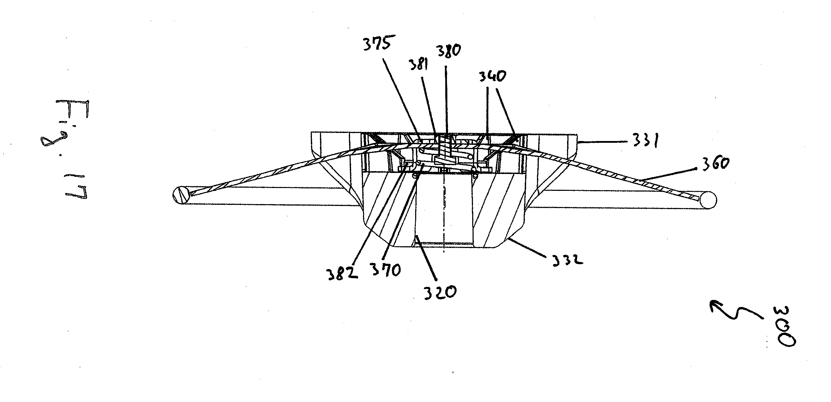

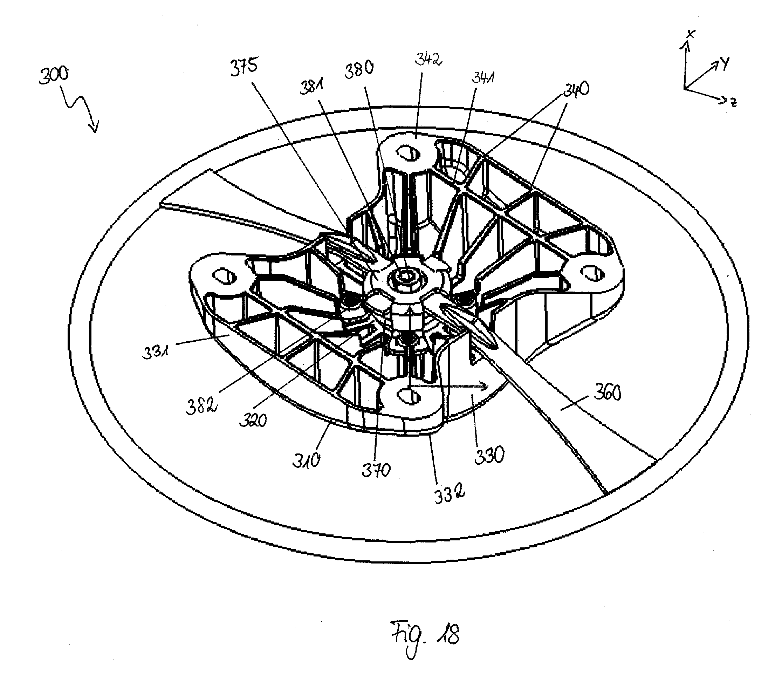

Im Folgenden wird anhand der Fign. 15 bis 18 eine Auslösevorrichtung 300 gemäß einer dritten Ausführungsform beschrieben. Fig. 15 zeigt eine Unteransicht der Auslösevorrichtung 300. Fig. 16 zeigt eine Vorderansicht der Auslösevorrichtung 300. Fig. 17 zeigt eine Querschnittsansicht durch die der Auslösevorrichtung 300 entlang der Schnittlinie D-D in Fig. 15. Fig. 18 zeigt eine perspektivische Ansicht der Auslösevorrichtung 300.

Die Auslösevorrichtung 300 umfasst einen Auslösekopf 310, ein Steuerkreuz 360, eine konische Schraubenfeder 370, einen Haltetopf 375, eine Justierschraube 380, eine Mutter 381, sowie vier Schrauben 382. Der Auslösemechanismus der Auslösevorrichtung 300 mit Steuerkreuz 360, Schraubenfeder 370, Haltetopf 375, Justierschraube 380 und Mutter 381 gleicht dem Auslösemechanismus der Auslösevorrichtung 200 der zweiten Ausführungsform und wird daher im folgenden nicht näher erläutert. Dagegen unterscheidet sich Auslösevorrichtung 300 in Bezug auf die Form des Auslösekopfes 310.

Der Auslösekopf 310 umfasst eine konische Aufnahmehülse 320, eine diese umgebende Gehäusewand 330 sowie die Aufnahmehülse 320 und die Gehäusewand 330 bzw. die Schraubenaufnahmen 342 verbindende Rippen 340. In der Draufsicht bzw. der Unteransicht ist der Auslösekopf 310 im Wesentlichen hantelförmig ausgebildet. Die Gehäusewand 330 umgibt die Aufnahmehülse 320 seitlich. In vertikaler Richtung, also in der Richtung der x-Achse ist die Gehäusewand 330 in einen oberen ersten Gehäusewandteil 331 und einen unteren zweiten Gehäusewandteil 332 unterteilt.

Der obere Gehäusewandteil 331 weist vier Gehäusewandabschnitte 331a, 331b, 331c und 331d auf, welche sich jeweils in der Richtung der x-Achse erstrecken. Die zwei Gehäusewandabschnitte 331a und 331c sind einander gegenüberliegend angeordnet und erstrecken sich zumindest abschnittsweise entlang der y-Achse. Auch die zwei Gehäusewandabschnitte 331b und 331d sind einander gegenüberliegend angeordnet und erstrecken sich im Wesentlichen entlang der Richtung z. Die Gehäusewandabschnitte 331a bis 331d sind wellenförmig ausgebildet, wie weiter unten noch im Detail erläutert wird. Die Höhe der Gehäusewand 331 ist größer als die Länge der Aufnahmehülse 320 in Richtung der x-Achse.

Der untere Gehäusewandteil 332 ist im Wesentlichen konisch und verbindet die Gehäusewandabschnitte 331a bis 331d mit der Aufnahmehülse 320. In vier Ecken bzw. peripheren Bereichen des Auslösekopfes 310 sind Schraubenaufnahmen 342 ausgebildet. Die Schraubenaufnahmen 342 sind im Wesentlichen hülsenförmig bzw. zylindrisch und erstrecken sich in der Richtung der x-Achse. Die Mittelpunkte der Schraubenaufnahmen 342 definieren ein Rechteck, oder anders ausgedrückt, die Schraubenaufnahmen 342 sind auf den Eckpunkten eines Rechtecks angeordnet. Die Anordnung der Schraubenaufnahmen 342 auf einem Rechteck ermöglicht es, den Auslösekopf 310 an Bürostühlen oder Industriestühlen mit entsprechenden Sitzflächen zu befestigen. Ferner sind die Schraubenaufnahmen 342 leicht langlochförmig bzw. oval ausgebildet, so dass der Auslösekopf 310 an Sitzen unterschiedlicher Maße befestigt werden kann.

Die Rippen 340 verbinden die Aufnahmehülse 320 mit der Gehäusewand 330 bzw. den Schraubenaufnahmen 342. Ferner sind zwischen der Aufnahmehülse 320 und den Gehäusewandabschnitten 331b bzw. 331d jeweils eine Zwischenwand 341 angeordnet. Die Zwischenwände 341 kreuzen die Rippen 340. Die Zwischenwände 341 erhöhen effektiv den Querschnitt der Biegespannungen aufnehmenden Wände und erhöhen somit die Stabilität des Auslösekopfes 310.

Die oberen Gehäusewandabschnitte 331a und 331c sind jeweils wellenförmig ausgebildet. Sie weisen jeweils zwei Ausbuchtungen auf, in denen die Schraubenaufnahmen 342 angeordnet sind. Diese zwei Ausbuchtungen entsprechen somit zwei "Wellen". Die Ausbuchtungen sind im Wesentlichen V-förmig mit abgerundeter Spitze und sind durch gerade Wandabschnitte miteinander verbunden. Die Gehäusewandabschnitte 331b und 331d sind gerade und verbinden die Gehäusewandabschnitte 331a und 331c miteinander. Somit ergibt sich die oben erwähnte Hantelform.

Durch die wellenförmigen Gehäusewandabschnitte 331a und 331c wird die Stabilität des Auslösekopfes 310 signifikant erhöht. Bei Lastwechseln treten in der Gehäusewand 330 Spannungen, insbesondere Biegespannungen auf, die über die Rippen 340 an die Aufnahmehülse 320 weitergeleitet werden. Dadurch, dass die Gehäusewandabschnitte 331a und 331c wellenförmig ausgebildet sind, wird der Querschnitt dieser Gehäusewandabschnitte effektiv vergrößert, so dass Spannungen in diesen Gehäusewandabschnitten besser verteilt werden können. Andererseits sind die Gehäusewandabschnitte 331b und 331d durch die Zwischenwände 341 verstärkt, so dass auch Spannungen in diesen Gehäusewandabschnitten besser verteilt werden können. Somit wird die Stabilität des Auslösekopfes auch bei hohen Belastungen gewährleistet. Ferner wird durch die Hantelform des Auslösekopfes 310 erreicht, dass die Schraubenaufnahmen 342 auch bei relativ geringem Materialaufwand relativ weit auseinander liegen. Somit wird ein stabiler Auslösekopf mit relativ geringem Gewicht erreicht.

### Vierte Ausführungsform

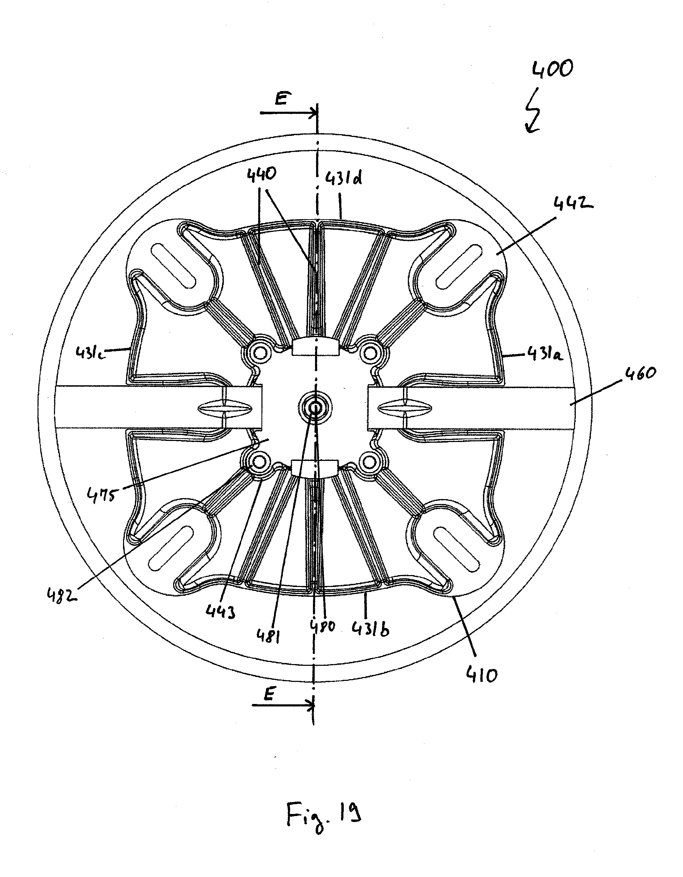

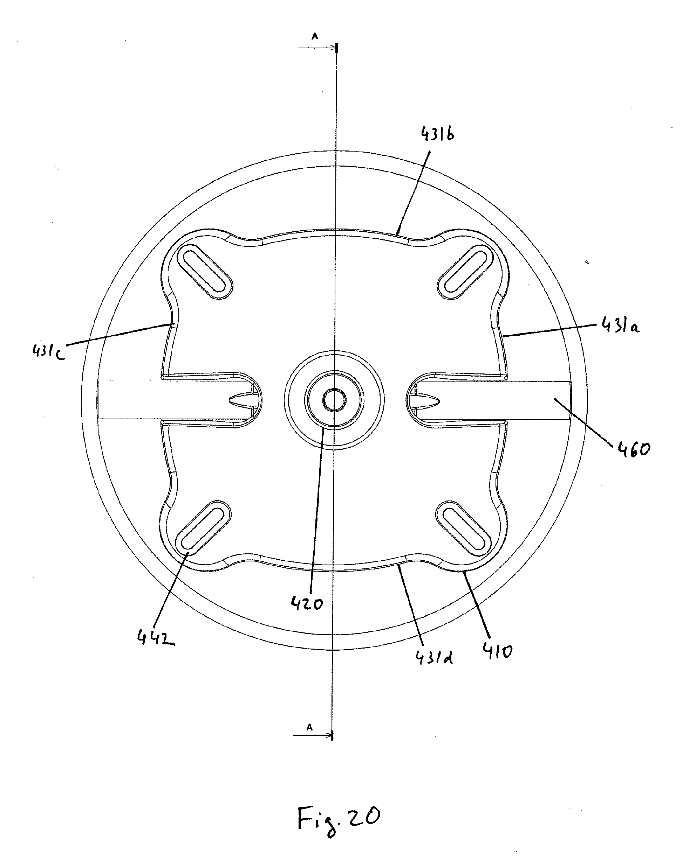

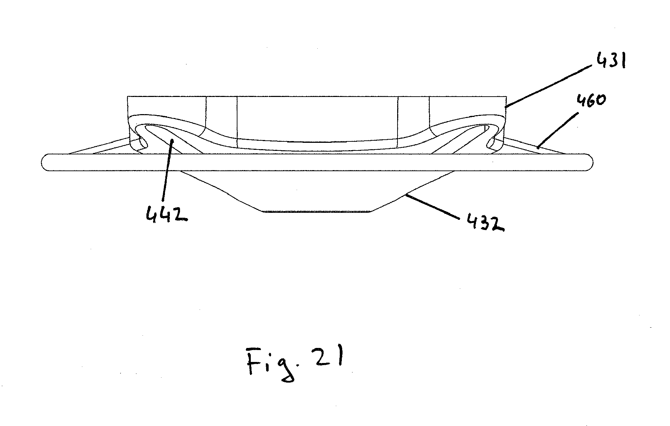

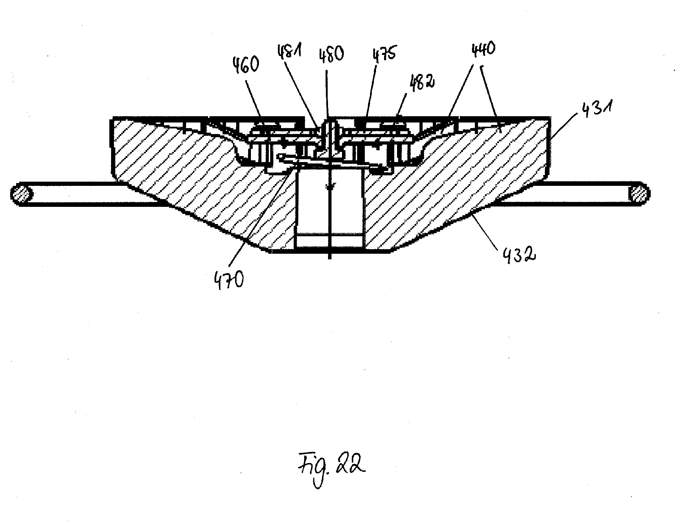

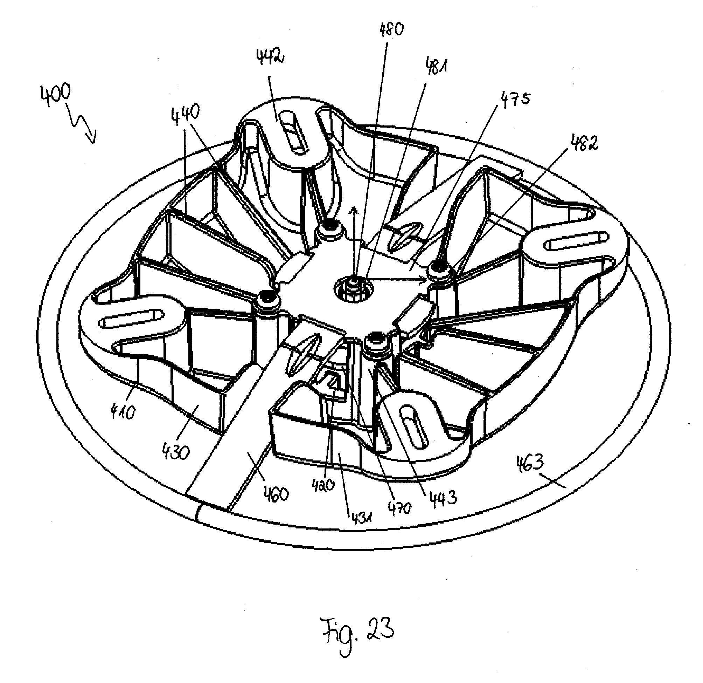

Im Folgenden wird anhand der Fign. 19 bis 23 eine Auslösevorrichtung 400 gemäß einer vierten Ausführungsform beschrieben. Fig. 19 zeigt eine Draufsicht der Auslösevorrichtung 400. Fig. 20 zeigt eine Unteransicht der Auslösevorrichtung 400. Fig. 21 zeigt eine Vorderansicht der Auslösevorrichtung 400. Fig. 22 zeigt eine Querschnittsansicht durch die der Auslösevorrichtung 400 entlang der Schnittlinie E-E in Fig. 19. Fig. 23 zeigt eine perspektivische Ansicht der Auslösevorrichtung 400.

Die Auslösevorrichtung 400 umfasst einen Auslösekopf 410, ein Steuerkreuz 460, eine konische Schraubenfeder 470, eine Kopfplatte 475, eine Justierschraube 480, eine Mutter 481, sowie vier Schrauben 482. Aspekte der vorliegenden Ausführungsform, die solchen der zweiten Ausführungsform ähneln, werden im Folgenden nicht im Detail erläutert.

Der Auslösekopf 410 umfasst eine konische Aufnahmehülse 420, eine diese umgebende Gehäusewand 430 sowie die Aufnahmehülse 420 und die Gehäusewand 430 bzw. die Schraubenaufnahmen 442 verbindende Rippen 440. Ferner ist die Gehäusewand 430 in ähnlicherweise wie die Gehäusewand 430 der ersten bzw. zweiten Ausführungsform mit einer Wellenform versehen. Andere Aspekte des Auslösekopfes 410 sind, soweit nichts anderes angegeben ist, wie für den Auslösekopf 410 der zweiten Ausführungsform beschrieben.

Die Gehäusewand 430 umgibt die Aufnahmehülse 420 seitlich. In vertikaler Richtung, also in der Richtung der x-Achse entlang der Längsachse der Aufnahmehülse 420 ist die Gehäusewand 430 in einen oberen ersten Gehäusewandteil 431 und einen unteren zweiten Gehäusewandteil 432 unterteilt.

Der Auslösekopf 410 ähnelt dem Auslösekopf 210 der zweiten Ausführungsform, unterscheidet sich jedoch dadurch, dass der Winkel, der von dem unteren Gehäusewandteil 332 und der x-Achse definiert wird, etwa 55 bis 65 Grad beträgt. Somit wird, bei gleicher Gesamthöhe des Auslösekopfes 410, die Höhe des oberen Gehäusewandteils 431 verlängert, so dass die Länge der mit dem oberen Gehäusewandteil 431 verbundenen Rippen 440 vergrößert wird. Dadurch kann ein Auslösekopf 410 mit niedrigem Profil und hoher Stabilität realisiert werden.

Ein weitere Unterschied zum Auslösekopf 210 der zweiten Ausführungsform besteht darin, dass die Schraubenaufnahmen 442 im Querschnitt langlochförmig sind, so dass der Auslösekopf 410 an Sitze von Bürostühlen unterschiedlicher Spezifikationen geschraubt werden kann.

Da der Auslösekopf 410 insgesamt flacher als der Auslösekopf 210 der zweiten Ausführungsform ist, weist er statt eines Haltetopfes eine Kopfplatte 475 auf. Diese Kopfplatte 475 ist im Wesentlichen quadratisch mit abgerundeten Ecken, in denen Durchgangslöcher zum Durchführen von Befestigungsschrauben 482 vorgesehen sind. An vier gleichmäßig in Umfangsrichtung voneinander beabstandeten Stellen der Aufnahmehülse 420 sind säulenförmige Vorsprünge 443 ausgebildet, die von der Aufnahmehülse nach oben ragen. Diese säulenförmige Vorsprünge 443 sind jeweils Sacklöchern mit einem Gewinde versehen. Die Kopfplatte 475 ist mit den Befestigungsschrauben 482 an diesen Vorsprüngen 443 befestigt. Das Steuerkreuz 460 wird durch die Federkraft der Torsionsfeder 470 von unten gegen die Kopfplatte 475 gedrückt. Das Auslösen der Gasfeder durch Betätigung des Betätigungsrings 463 erfolgt wie für die zweite Ausführungsform erläutert.

Auch in der vorliegenden Ausführungsform sind die Gehäusewandabschnitte 431a - 431d wellenförmig ausgebildet, so dass die für die erste Ausführungsform beschriebenen Vorteile erzielt werden.

Obgleich die vorliegende Erfindung vorstehend anhand von bevorzugten Ausführungsbeispielen beispielhaft beschrieben wurde, ist sie darauf nicht beschränkt, sondern auf vielfältige Art und Weise modifizierbar. Insbesondere sind Merkmale der einzelnen Ausführungsformen miteinander kombinierbar.

### Bezugszeichenliste

- 100: Auslösevorrichtung
- 110: Auslösekopf
- 120: Aufnahmehülse
- 130: Gehäusewand
- 131: oberer Gehäusewandteil
- 131a-131d: Gehäusewandabschnitte
- 132: unterer Gehäusewandteil
- 133: Ausnehmung
- 140: Rippen
- 141: Lager
- 141a, 141b: Lagerelemente
- 142: Schraubenaufnahmen
- 143: Auswurfelemente
- 144: Rippen
- 160: Hebelarm
- 161: Querachse
- 170: Schenkelfeder
- 190: Gasfeder
- 200, 200': Auslösevorrichtung
- 210: Auslösekopf
- 220: Aufnahmehülse
- 230: Gehäusewand
- 231: oberer Gehäusewandteil
- 231a-231d: Gehäusewandabschnitte
- 232: unterer Gehäusewandteil
- 233: Ausnehmung
- 240: Rippen
- 242: Schraubenaufnahmen
- 260: Steuerkreuz
- 261: Hauptarme
- 262: Nebenarme
- 263, 263': Betätigungsring
- 270: Schraubenfeder
- 275: Haltetopf
- 280: Justierschraube
- 281: Mutter
- 282: Schrauben
- 300: Auslösevorrichtung
- 310: Auslösekopf
- 320: Aufnahmehülse
- 330: Gehäusewand
- 331: oberer Gehäusewandteil
- 331a-331d: Gehäusewandabschnitte
- 332: unterer Gehäusewandteil
- 340: Rippen
- 341: Zwischenwand
- 342: Schraubenaufnahmen
- 360: Steuerkreuz
- 370: Schraubenfeder
- 375: Haltetopf
- 380: Justierschraube
- 381: Mutter
- 382: Schrauben
- 400: Auslösevorrichtung
- 410: Auslösekopf
- 420: Aufnahmehülse
- 430: Gehäusewand
- 431: oberer Gehäusewandteil
- 431a-431d: oberer Gehäusewandabschnitt
- 432: unterer Gehäusewandteil
- 440: Rippen
- 442: Schraubenaufnahmen
- 443: säulenförmige Vorsprünge
- 460: Steuerkreuz
- 463: Betätigungsring
- 470: Schraubenfeder
- 475: Kopfplatte
- 480: Justierschraube
- 481: Mutter
- 482: Schrauben

## Patentansprüche

1. Auslösekopf (110, 210, 310, 410) für eine Gasfeder (190), mit
- einer Aufnahmehülse (120, 220, 320, 420) zur Aufnahme einer Gasfeder (190),
- einer Gehäusewand (130, 230, 330, 430), die die Aufnahmehülse (120, 220, 320, 420) umgibt und mindestens vier Gehäusewandabschnitte (131a-131d, 231a-231d, 331a-331d, 431a-431d) aufweist, die sich parallel zur Längsachse der Aufnahmehülse (120, 220, 320, 420) erstrecken, und
- Rippen (140, 240, 340, 440), die sich von der Aufnahmehülse (120, 220, 320, 420) radial zu der Gehäusewand (130, 230, 3 30, 430) erstrecken und die Aufnahmehülse (120, 220, 320, 420) mit der Gehäusewand (130, 230, 330, 430) verbinden,
wobei mindestens zwei einander gegenüberliegende Gehäusewandabschnitte (131a-131d, 231a-231d, 331a-331d, 431a-431d) der Gehäusewand (130, 230, 330, 430) zumindest abschnittsweise wellenförmig ausgebildet sind.

2. Auslösekopf (110, 210, 310, 410) nach Anspruch 1,
wobei die Gehäusewand (130, 230, 330, 430) einen ersten Gehäusewandteil (131, 231, 331, 431) und einen zweiten Gehäusewandteil (132, 232, 332, 432) aufweist,
wobei sich der erste Gehäusewandteil (131, 231, 331, 431) parallel zur Längsachse der Aufnahmehülse (120, 220, 320, 420) erstreckt, und
wobei sich der zweite Gehäuseabschnitt von einem Ende des ersten Gehäuseabschnitts konisch zur Aufnahmehülse (120, 220, 320, 420) erstreckt.

3. Auslösekopf (110, 210, 310, 410) nach einem der vorhergehenden Ansprüche,
wobei der Auslösekopf (110, 210, 310, 410) mindestens zwölf Rippen (140, 240, 340, 440) aufweist.

4. Auslösekopf (110, 210, 310, 410) nach einem der vorhergehenden Ansprüche,
wobei der Auslösekopf (110, 210, 310, 410) aus einer Aluminium-Legierung, vorzugsweise aus AlSi8Cu3 gefertigt ist.

5. Auslösekopf (110, 210, 310, 410) nach einem der vorhergehenden Ansprüche,
wobei der Auslösekopf (110, 210, 310, 410) durch Druckguss hergestellt ist.

6. Auslösekopf (110, 210, 310,410) nach einem der vorhergehenden Ansprüche,
wobei die Rippen (140, 240, 340, 440) Auswurfelemente (143) zum Auswerfen aus einer Gussform aufweisen.

7. Auslösekopf (110, 210, 310, 410) nach einem der vorhergehenden Ansprüche,
wobei die Gehäusewand (130, 230, 330, 430) mit mindestens einer Ausnehmung (133, 233) zur Durchführung eines Hebelarms versehen ist.

8. Auslösekopf (110, 210, 310, 410) nach einem der vorhergehenden Ansprüche,
wobei alle vier Gehäusewandabschnitte (131a-131d, 231a-231d, 331a-331d, 431a-431d) der Gehäusewand (130, 230, 330, 430) zumindest abschnittsweise wellenförmig ausgebildet sind.

9. Auslösekopf (110, 210, 310, 410) nach einem der vorhergehenden Ansprüche,
wobei die Gehäusewandabschnitte (131a-131d, 231a-231d, 331a-331d, 431a-431d) der Gehäusewand (130, 230, 330, 430) abschnittsweise konzentrisch zur Aufnahmehülse (120, 220, 320, 420) ausgebildet sind.

10. Auslösevorrichtung (100, 200, 300, 400) für eine Gasfeder, mit
- einem Auslösekopf (110, 210, 310, 410) nach einem der Ansprüche 1 bis 9, welcher auf der Innenseite eines der Gehäusewandabschnitte (131a-131d, 231a-231d, 331a-331d, 431a-431d) ein Lager (141) zur Lagerung eines Hebelarms (160) aufweist und wobei dieser Gehäusewandabschnitt (131a-131d, 231a-231d, 331a-331d, 431a-431d) mit mindestens einer Ausnehmung (133, 233) zur Durchführung eines Hebelarms versehen ist,
- einem Hebelarm (160), der durch die Ausnehmung (133, 233) geführt ist und derart im Lager (141) gelagert ist, dass sein eines Ende in Richtung der Längsachse der Aufnahmehülse (120, 220, 320, 420) zum Auslösen einer in der Aufnahmehülse (120, 220, 320, 420) aufgenommenen Gasfeder (190) verschwenkbar ist, und
- einer Schenkelfeder (170), die so·angeordnet ist, dass sie auf das eine Ende des Hebelarms eine Federkraft ausübt und somit das Spiel zwischen dem Hebelarm (160) und einer Auslösenocke der Gasfeder (190) aufhebt.

11. Auslösevorrichtung (100, 200, 300, 400) für eine Gasfeder, mit
- einem Auslösekopf (110, 210, 310, 410) nach einem der Ansprüche 1 bis 10, wobei zwei gegenüber voneinander angeordnete Gehäusewandabschnitte (131a-131d, 231a-231d, 331a-331d, 431a-431d) jeweils eine Ausnehmung (133, 233) zur Durchführung eines Hebelarms (160) aufweisen, und
- einem Steuerkreuz (260, 360, 460) mit zwei Hauptarmen (261), die respektive durch die zwei Ausnehmungen (133, 233) geführt sind und beidseitig vom Auslösekopf (110, 210, 310, 410) abstehen, wobei ein mittlerer Abschnitt des Steuerkreuzes (260, 360, 460) in Richtung der Längsachse der Aufnahmehülse (120, 220, 320, 420) verschwenkbar ist, und
- einem Betätigungsring (263, 263', 463), der mit den zwei vom Auslösekopf (110, 210, 310, 410) abstehenden Enden des Steuerkreuzes (260, 360, 460) verbunden ist.

12. Auslösevorrichtung (100, 200, 300, 400) nach Anspruch 11,
wobei der Betätigungsring (263, 263', 463) kreisförmig oder sattelförmig ist.

13. Auslösevorrichtung (100, 200, 300, 400) nach einem der Ansprüche 10 bis 12, ferner aufweisend:
- ein plattenförmiges Halteelement (275, 375, 475) welches an einem Ende der Aufnahmehülse (120, 220, 320, 420) angeordnet ist, wobei das Steuerkreuz (260, 360, 460) zwischen dem Halteelement (275, 375, 475) und der Aufnahmehülse (120, 220, 320, 420) angeordnet ist, und
- eine Schraubenfeder, die zwischen der Aufnahmehülse (120, 220, 320, 420) und dem Steuerkreuz (260, 360, 460) angeordnet ist und das Steuerkreuz (260, 360, 460) gegen das Halteelement (275, 375, 475) drückt.

14. Auslösevorrichtung (100, 200, 300, 400) nach einem der Ansprüche 10 bis 13, ferner aufweisend eine Justierschraube (280, 380, 480), die in eine Gewindebohrung im Steuerkreuz (260, 360, 460) gegenüber der Aufnahmehülse (120, 220, 320, 420) geschraubt ist und deren Vorsprung in Richtung der Aufnahmehülse (120, 220, 320, 420) einstellbar ist.

15. Auslösevorrichtung (100, 200, 300, 400) nach einem der Ansprüche 10 bis 14, wobei die Aufnahmehülse (120, 220, 320, 420) konisch ausgebildet ist.
